# EUROPEAN PATENT SPECIFICATION

(11) **EP 0 322 888 B1**
(45) Date of publication and mention of the grant of the patent: **16.02.1994**
(21) Application number: 88121784.8
(22) Date of filing: 28.12.1988
(51) Int. Cl.: G06F 12/08

(54) **Cache memory device**
Cache-Speichervorrichtung
Dispositif d'antimémoire

(30) Priority: 28.12.1987 JP 332177/87
(43) Date of publication of application: 05.07.1989
(73) Proprietor: KABUSHIKI KAISHA TOSHIBA, Kawasaki-shi, Kanagawa-ken 210 (JP)
(72) Inventor: Miyoshi, Akio, Ome-shi Tokyo-to (JP)
(74) Representative: Lehn, Werner, Dipl.-Ing.

(56) References cited:
- EP-A- 0 220 451
- US-A- 4 638 431

## Description

### BACKGROUND OF THE INVENTION

### Field of the Art

This invention relates to a cache memory device, and more particularly to an improvement in a method for clearing its valid bits.

### Prior Art

For providing a high speed access operation to the main memory of CPU in a computer, cache memories have been conventionally used. The cache memory is provided between CPU and the main memory and has a function to store a portion of data in the main memory to which access is provided by CPU with a high frequency. For data stored in the cache memory, CPU can read out them from the cache memory in place of reading out them from the main memory, so high speed access operation can be realized.

Generally, the operation of computer is classified into two modes: One is a supervisory mode corresponding to the state where OS software is being operated, and the other is a user mode corresponding to the state where application software used in the user mode is being operated. Since the computer operates while conducting a context switch to switch every moment task corresponding to respective units of the program, the above-mentioned two modes may be also often switched by this context switch. When, virtual addresses are used for the cache memory and when such a context switch occurs, it is required to clear the content of the cache memory stored in the previous task.

Such a clear operation is carried out in practice by resetting valid bits in the cache memory. Namely, when valid bits are reset, data in that cache memory will be neglected. However, reset of valid bits was collectively carried out in conventional cache memory devices. Namely, the contents of the cache memory were collectively cleared.

However, such a collective clear results in the problem that effective utilization of the cache memory is hindered. For example, where a context switch occurs in the user mode, it is sufficient to clear only data used in the user mode task in principle. In other words, it is unnecessary to clear data used in the supervisory mode. However, since the entirety of the cache memory is cleared by the context switch in the conventional cache memory device, data required in the supervisory mode as well would not be left in the cache memory. For this reason, work for transferring data from the main memory to the cache memory for a second time in the supervisory mode is required.

US-A-4 638 431 shows that part of a cache may be flushed on the basis of an address range. In EP-A-0 220 451 cache directory entries include system variable values CDID ("Control Domain IDentity") and UID ("User IDentity), and there is a reset function which invalidates only those entries having a particular CDID and/or UID.

### SUMMARY OF THE INVENTION

Thus, an object of this invention is to provide a cache memory device to realize an effective utilization of the memory, thus making it possible to improve the access speed so that it is faster.

According to the present invention, there is provided a cache memory device provided in a compute for providing a high speed access operation to a main memory of the CPU, comprising: means for inputting a mode signal indicative of the current one of a plurality of operational modes of the computer, a cache storage unit having a plurality of entries, entry selector means for selecting an entry in the cache storage unit on the basis of a first section of an address value subject to access and said current mode signal, cache set means having a function to store data from a main memory into the entry selected by the entry selector means on the basis of the access operation of the CPU, to store a second section of the address value subject to access into the selected entry and to further set a valid flag provided in the selected entry, cache readout means for comparing the second section of the address value stored in the entry selected by the entry selector means with a second section of the address value subject to access on the basis of the access operation of the CPU, thus to read out data stored in the selected entry when both the above sections are coincident with each other and a valid flag in the selected entry is set, and cache reset means having a function to reset valid flags in the cache storage unit collectively of all entries corresponding to one of said plurality of operational modes and of no others.

In the cache memory device according to this invention, entry selection is conducted on the basis of the operational mode of the computer. Data used in one operational mode is stored into one area within the cache memory. So to speak, data are stored into the cache memory as being grouped into every data used in respective modes. For this reason, the clear operation can be carried out with groups of data corresponding to respective modes being as units, resulting in no possibility that data used in other modes as well are collectively cleared. Eventually, this invention can realize an effective utilization of the cache memory and improve the access speed so that it is faster.

### BRIEF DESCRIPTION OF THE DRAWINGS

In the accompanying drawings:
Fig. 1 is a block diagram showing the actual configuration of a cache memory device according to an embodiment of this invention;
Fig. 2 is a block diagram showing the basic configuration of a conventional cache memory device; and
Fig. 3 is a block diagram showing the basic configuration of a cache memory device according to an embodiment of this invention.

### DESCRIPTION OF THE PREFERRED EMBODIMENT

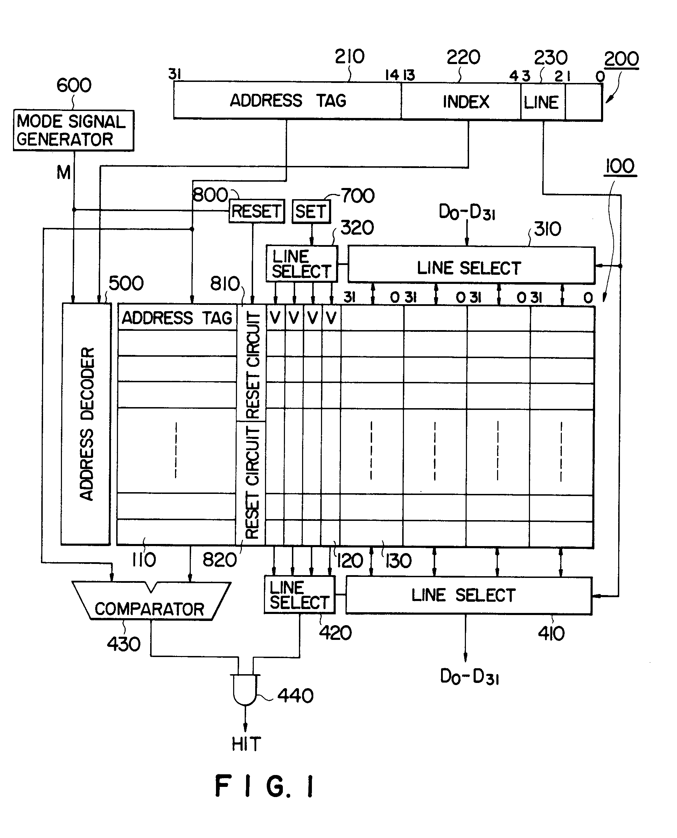

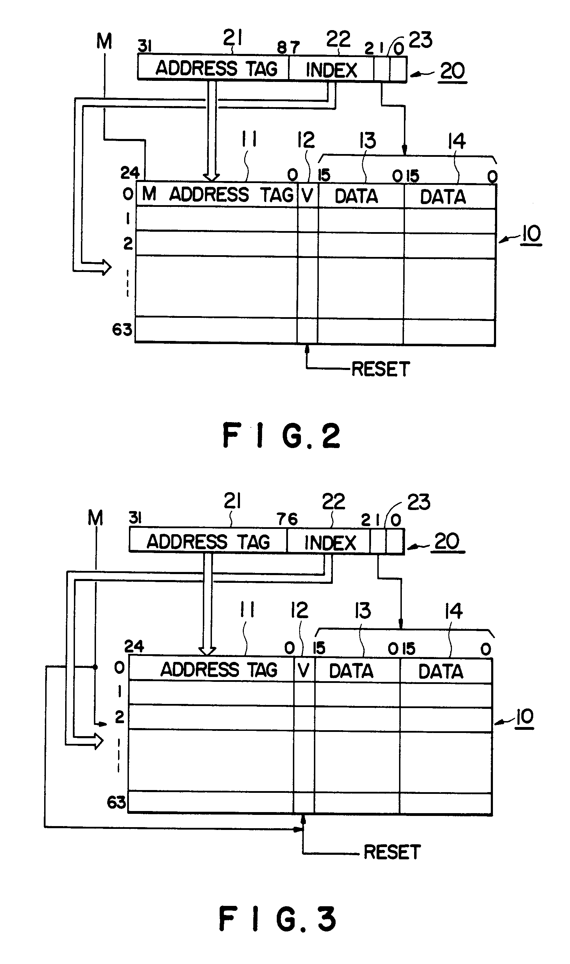

This invention will be described in connection with an embodiment shown hereinbelow. Fig. 1 is a block diagram showing an embodiment of a cache memory device according to this invention. Prior to explaining this embodiment, the fundamental principle of this invention will be described in comparison with the conventional device with reference to Figs. 2 and 3.

### Device of Fig. 2

Fig. 2 is a block diagram showing the basic configuration of a conventional typical cache memory device. A cache storage unit 10 has 64 entries of 0 to 63. In this figure, one entry is indicated on one line. Each entry is composed of an address tag section 11 (25 bits of 0 to 24), a valid bit section 12 (1 bit), and two data section 13 and 14 (each consisting of 16 bits of 0 to 15). A logical address 20 indicates the data structure that CPU should provide access to. This address data is comprised of 32 bits of 0 to 31 wherein high order 24 bits (bits 8 to 31), lower order 6 bits (bits 2 to 7) and the lower order bit 1 are called "address tag 21", "index 22" and "select 23", respectively. The least significant bit (LSB) 0 is not used in this embodiment.

The operation for setting data in a main memory (not shown) into the cache storage unit 10 will be first described. Initially, by the operation of the index 22 of the logical address 20 designated by CPU, one entry is specified. Since the index 22 is composed of data of 6 bits, one of 64 entries can be specified. When an entry is specified, the address tag section 21 of the logical address 20 is stored into the address tag section 11 in that entry. At this time, the address tag 21 is stored into the section having a capacity corresponding 24 bits of 0 to 23 of the address tag section 11, and a logic value of the mode signal M is stored into the most significant bit (MSB) (bit 24) of the address tag section 11. Here, the mode signal M is a signal indicating the operational mode of the computer. In this example, logic "1" and logic "0" are caused to correspond to the supervisory mode corresponding to the state where OS software of the computer is being operated and the user mode corresponding to the state where application software is being operated, respectively. Subsequently, the valid bit V of the valid bit section 12 in the same entry is set to "1". Namely, valid flag is set up. By addressing executed by CPU, data of 32 bits is read out from an address corresponding to the logical address 20 in the main memory. The data thus read out is stored into both the data sections 13 and 14. Thus, data transfer from the cache memory to the cache storage unit 10 is carried out. As just described above, once setting in respective of a predetermined logical address 20 is made, where an access to the same address value is provided during a time period in the same mode at subsequent times, data will be read out from the cache storage unit 10 in place of the main memory.

The readout operation from the cache storage unit 10 is as follows. When a logical address 20 is given from CPU for performing read operation, one entry is specified by the index 22 thereof. Subsequently, 25 bit data consisting of the mode signal M and the address tag 21 is compared with 25 bit data in the address tag section 11 in a specified entry. When both the data are completely in correspondence with each other and the valid bit V in that entry represents "1", "Hit" results. Namely, data that CPU desires to obtain exists in the cache storage unit 10. Accordingly, when "Hit" occurs, data from the data sections 13 and 14 in that entry is read out, whereas readout from the main memory is not carried out. When the content of the address tag section 11 does not coincide, or the valid bit represents "0", "Hit" does not result. Namely, the data that CPU desires to obtain does not exist in the cache storage unit 10. Accordingly, CPU reads out data from the main memory, and sets that data into the cache storage unit 10 as previously described.

Finally, resetting operation of the cache storage unit 10 will be described. When a context switch occurs, or in similar cases, it is required to reset the cache storage unit 10. Such a reset is made by allowing the valid bits V to be all "0". Namely, all valid flags are cleared. Accordingly, immediately after such a reset operation has been made, there is no case which becomes "Hit". It has been described that since all entries are unconditionally cleared as stated above, there occurs the problem that an effective utilization of the cache memory cannot be realized.

### Device of Fig. 3

Fig. 3 is a block diagram showing a cache memory device according to an embodiment of this invention. In this figure, the same components as those in the device shown in Fig. 2 are designated by the same reference numerals, respectively. The basic difference between this device and the device shown in Fig. 2 is the manner of utilization of the mode signal M. The mode signal M is stored in the MSB of the address tag section 11 in the device of Fig. 2, whereas the mode signal M is utilized for specifying the entry in the device of Fig. 3. To realize such a utilization, while the address tag 21 in the device of Fig. 2 was 24 bit configuration, corresponding tag in the device of Fig. 3 employs 25 bit configuration, i.e., the number of bits is increased by one in the latter device. To the contrary, while the index 22 in the device of Fig. 2 was 6 bit configuration, corresponding index in the device of Fig. 3 employs 5 bit configuration, i.e., the number of bits is decreased by one in the latter device. As a result, the configuration of the cache storage unit 10 is the same in both the devices.

In the device of Fig. 3, setting of data will be made as follows. Initially, by the index 22 of the logical address 20 indicated by CPU and the mode signal M at that time, one entry is specified. Since entry is specified by data of 6 bits in total obtained by adding data of 5 bits constituting the index 22 to 1 bit of the mode signal M, one of 64 entries will be specified also in this case. Where it is here assumed that the mode signal M is used for the MSB of 6 bit data for specifying the entry, one of entries 0 to 31 is specified when the mode signal M represents "0" and one of entries 32 to 63 is specified when the mode signal M represents "1". Namely, the upper half of the entry and the lower half thereof can be separately used in a certain operational mode and in another operational mode, respectively. When entry has been specified, the address tag 21 is caused to be stored into the address tag section 11 in that entry to allow the valid bit section 12 to be "1" to thereby set up the valid flag, thus to store data from the main memory in the data sections 13 and 14.

Data read in this device will be conducted as follows. Namely, by the index 22 of the logical address 20 to be read and the mode signal M at that time, one entry is specified. Then, the content of the address tag section 11 in this entry is compared with the address tag 21 in the logical address 20. As a result, when both the values are coincident with each other and the valid bit section 12 represents "1", "Hit" results. Thus, data is read out from the data sections 13 and 14.

The feature of this device resides in reset operation. Also in this device, reset is performed by setting the valid bit of each entry to "0" in the same manner as in the Fig. 2 device. In addition, this device can select an entry for resetting. Such a selection is made on the basis of the mode signal M and the reset signal of the entirety of the system. For example, at the time of reset of the entirety of the system, valid bits of all entries are reset to "0". When the mode signal M represents "1", only valid bits of the entries 0 to 31 are reset to "0". Further, when the mode signal M represents "0", reset operation is not executed. Accordingly, reset can be applied only to necessary entries on the basis of the operational mode.

### Device of Fig. 1

Fig. 1 is a block diagram showing a more actual configuration of a cache memory device according to an embodiment of this invention. In this device, a cache storage unit 100 has 2048 entries, each entry consisting of an address tag section 110, a valid bit section 120, and a data section 130. The data section 130 is divided into four lines each consisting of 32 bits. One of four lines is selected by line selectors 310 and 410. Thus, data D0 to D31 of 32 bits are outputted and inputted. In correspondence with these four lines, the valid bit section 120 is also divided into four sections, each serving as a valid bit of one bit. One of four valid bits is selected by line selectors 320 and 420.

A logical address 200 represents the bit structure of address data of 32 bits to which an access is to be provided by CPU. Here, the upper order 18 bits, the lower order 10 bits, and the further lower order 2 bits are called an address tag 210 (bits 14 to 31), an index 220 (bits 4 to 13), and a line 230 (bits 2 and 3), respectively. The least significant 2 bits are not used in this embodiment.

An address decoder 500 has a function to specify an entry of the cache storage unit on the basis of the mode signal M delivered from a mode signal generator 600 and an index 220 in the logical address 200. In this example, the mode signal M is one bit signal indicating either of two operation modes of the computer. Accordingly, for example, in the supervisory mode, the mode signal generator 600 generates one bit signal of M = "1", while in the user mode, it generates one bit signal of M = "0". In this embodiment, such a mode signal M is given to the most significant bit (MSB) of the address decoder 500. To other bits of the address decoder 500, the index 220 of the logical address 200 is given. Eventually, 1 bit of the mode signal and 10 bits of the index 220 are given to the address decoder 500. Thus, data of 11 bits in total is inputted. The address decoder 500 will select one of 2048 ( = 2¹¹) entries on the basis of the input data of 11 bits. Since the mode signal M is regarded as the MSB input, the upper half of entries 0 to 1023 will be selected in the case of M = "0" and the lower half of entries 1024 to 2047 will be selected in the case of M = "1". In other words, the upper half and the lower half will be selected in the user mode and in the supervisory mode, respectively. Thus, the upper half of the cache storage unit 100 and the lower half thereof can be individually utilized as the user area and the supervisory area, respectively.

A comparator 430 is a circuit for judging whether the address tag 210 in the logical address 200 and data in the address tag section 110 are coincident with each other. When both the values are coincident with each other, the comparator 430 outputs a logic "1", while when otherwise, it outputs a logic "0". Moreover, an AND gate 440 provides a logical AND of an output of the comparator 430 and a valid bit V selected by the line selector 420 to output it. When the output of the AND gate 440 represents "1", "Hit" is indicated.

A cache setter 700 has a function to set one valid bit selected by the line selector 320 of a specified entry to "1", thus to set up a valid flag. Moreover, a cache resetter 800 has a function to give an instruction to reset circuits 810 and 820 to set the valid bit to "0", thus to clear it. In this example, when an instruction is given to the reset circuit 810, all valid bits of entries 0 to 1023 (the upper half) are set to "0" and when an instruction is given to the reset circuit 820, all valid bits of entries 1024 to 2047 (the lower half) are set to "0". This device is characterized in that it is possible to individually clear the user area of the upper half and the supervisory area of the lower half.

The operation for setting data into the cache storage unit 100 in this device is as follows. Initially, when a logical address 200 is given by CPU, the address decoder 500 selects one entry on the basis of the index 220 and the mode signal M. The portion of the address tag 210 of the logical address 200 is stored into the address tag section 110. Further, data D0 to D31 of 32 bits read out from an address corresponding to the logical address 200 of the main memory are stored into one line of the data section 130 of a selected entry. The line select 310 makes selection of this line on the basis of line 230 (data of 2 bits). At the same time, the line select 320 also makes selection of line. Thus, a valid bit corresponding to a line selected by the cache setter 700 is set to "1".

The data read operation in this device is as follows. When CPU instructs data readout of the address of the logical adress 200, the address decoder selects one entry on the basis of the mode signal M and the index 220. Then, data in the address tag section 110 of the selected entry and the address tag 210 of the logical address 200 are compared with each other by the comparator 430. When both the values are coincident with each other, the comparator 430 outputs logic "1" to the AND gate 440. On the other hand, the line select 420 selects one of four valid bits on the basis of the line 230 in the logical address 200 to deliver the logical value of the selected valid bit to the AND gate 440. Only when two inputs both represent "1", the AND gate 440 outputs the logical value "1" indicative of "Hit". On the other hand, the line select 410 selects one line in the data section 130 on the basis of the line 230 to read out data D0 to D31 of 32 bits from the selected line. Where the AND gate 440 outputs logic "1" to indicate "Hit", CPU handles data D0 to D31 from the line select 410 as readout data as they are. In contrast, where the output of the AND gate 440 represents logic "0", data from the line select 410 is neglected. Thus, CPU handles data from the main memory as readout data.

The reset operation of this device is as follows. Where a reset immediately after power is on occurs, the cache resetter 800 gives a reset instruction to both the reset circuits 810 and 820. In addition, where a reset occurs when the device operates in the supervisory mode (M = 1), the cache resetter 800 gives a reset instruction only to the reset circuit 810. When such a reset operation is carried out, the following merit will be obtained. Namely, where the device is being operated in the supervisory mode, only the reset circuit 810 functions. Thus, only the entry of the user area of the upper half in the cache storage unit 100 is reset. Accordingly, the entry of the supervisory area of the lower half remains without being reset, thus making it possible to utilize the supervisory area of the lower half as it is also at subsequent times. As described above, since entry can be selectively reset, the cache storage unit can be effectively utilized. Such a selective reset condition is not limited to the above-described embodiment, but any condition may be set. While the mode signal M is delivered to the MSB of the address decoder and the cache storage unit 100 is grouped into the entry of the upper half and the entry of the lower half in the above-described embodiment, other grouping may be of course employed. For example, if that signal is given to the LSB, the cache storage unit 100 may be grouped into even entries and odd entries. In addition, if the mode signal M is a signal of 2 bits, the cache storage unit 100 may be grouped into four sections.

### Advantages with the Invention

As described above, the cache memory device according to this invention is constructed so that the entry is grouped by the mode signal indicating a plurality of operational modes, thus to permit reset of the entry with the group as a unit. Accordingly, effective utilization of the memory is realized, thus making it possible to improve the access speed so that it is faster.

## Claims

1. A cache memory device provided in a computer for providing a high speed access operation to a main memory of the CPU, comprising:
means (600) for inputting a mode signal indicative of the current one of a plurality of operational modes of said computer;
a cache storage unit (100) having a plurality of entries;
entry selector means (500) for selecting an entry of said cache storage unit (100) on the basis of a first section of an address value subject to access and said current mode signal;
cache set means (700) having a function to store data from a main memory into the entry selected by said entry selector means (500) on the basis of the access operation of said CPU, to store a second section of an address value subject to access into said selected entry and to further set a valid flag provided in said selected entry;
cache readout means (430) for comparing said second section of said address value stored in said entry selected by said entry selector means (500) with said second section of said address value subject to access on the basis of the access operation of said CPU, thus to read out data stored in said selected entry when the above both sections are coincident with each other and a valid flag in said selected entry is set; and
cache reset means (800) having a function to reset valid flags in said cache storage unit (100) collectively of all entries corresponding to one of said plurality of operational modes and of no others.

2. A cache memory device as set forth in claim 1, wherein said first section of said address value is comprised of bits having an order lower than those of said second section.

3. A cache memory device as set forth in claim 1, wherein said entry selector means (500) is comprised of an address decoder (500), said mode signal and said first section of said address value being allocated to the input of said address decoder (500).

4. A cache memory device as set forth in claim 1, wherein a logical value indicative of a supervisory mode corresponding to the state where OS software is being operated and a user mode corresponding to the state where application software used by user is being operated is used as said mode signal.

5. A cache memory device as set forth in claim 4, wherein said cache memory unit (100) is composed of a supervisory area and a user area, said entry selector means (500) operative to select entries in said supervisory area at the time of said supervisory mode, and to select said user area at the time of said user mode.

6. A cache memory device as set forth in claim 5, wherein said cache reset means (800) selectively resets only entries within said user area in said supervisory mode.

## Patentansprüche

1. Cache-Speichervorrichtung vorgesehen in einem Computer zum Vorsehen eines Hochgeschwindigkeits-Zugriffsbetriebs auf einen Hauptspeicher der CPU mit:
einer Einrichtung (600) zum Eingeben eines Modussignals zum Anzeigen des laufenden einer Vielzahl von Betriebsmodi des Computers;
einer Cache-Speichereinheit (100) mit einer Vielzahl von Einträgen;
einer Eintragsselektoreinrichtung (500) zum Auswählen eines Eintrags der Cache-Speichereinheit (100) auf der Basis eines ersten Abschnitts eines Adressenwerts, welcher dem Zugriff und dem laufenden Modussignal unterliegt;
einer Cache-Setzeinrichtung (700) mit einer Funktion, Daten zu speichern von einem Hauptspeicher in den Eintrag ausgewählt durch die Eintragsselektoreinrichtung (500) auf der Basis des Zugriffsbetriebs der CPU, um einen zweiten Abschnitt eines Adressenwerts, welcher einem Zugriff unterliegt, in den ausgewählten Eintrag zu speichern, und um weiterhin ein Gültig-Flag zu setzen, welches vorgesehen ist in dem ausgewählten Eintrag;
einer Cache-Ausleseeinrichtung (430) zum Vergleichen des zweiten Abschnitts des Adressenwerts, gespeichert in dem Eintrag, der ausgewählt ist durch die Eintragsselektoreinrichtung (500), mit dem zweiten Abschnitt des Adressenwertes, welcher dem Zugriff unterliegt, auf der Basis des Zugriffsbetriebs der CPU, um somit Daten auszulesen, die gespeichert sind in dem ausgewählten Eintrag, wenn die obigen beiden Abschnitte koinzident miteinander sind, und ein Gültig-Flag in dem ausgewählten Eintrag zu setzen; und
einer Cache-Rücksetzeinrichtung (800) mit einer Funktion, Gültig-Flags in der Cache-Speichereinheit (100) kollektiv zurückzusetzen von allen Einträgen entsprechend einem der Vielzahl von Betriebsmodi und von keinem anderen.

2. Cache-Speichervorrichtung nach Anspruch 1,
**dadurch gekennzeichnet,** daß der erste Abschnitt des Adreßwertes aus Bits besteht mit einer Wertigkeit niedriger als der derer des zweiten Abschnittes.

3. Cache-Speichervorrichtung nach Anspruch 1,
**dadurch gekennzeichnet,** daß die Eintragselektoreinrichtung (500) besteht aus einem Adressendecoder (500), wobei das Modussignal und der erste Abschnitt des Adressenwerts zugeordnet werden der Eingabe des Adressendecoders (500).

4. Cache-Speichervorrichtung nach Anspruch 1,
**dadurch gekennzeichnet,** daß ein logischer Wert zum Anzeigen eines Überwachungsmodus entsprechend dem Zustand, in dem OS-Software betrieben wird, und eines Benutzermodus entsprechend dem Zustand, in dem Anwendungssoftware benutzt durch einen Benutzer betrieben wird, als das Modussignal benutzt wird.

5. Cache-Speichervorrichtung nach Anspruch 4,
**dadurch gekennzeichnet,** daß die Cache-Speichereinheit (100) besteht aus einem Überwachungsbereich und einem Benutzerbereich, wobei die Eintragsselektoreinrichtung (500) tätig ist, Einträge in dem Überwachungsbereich zur Zeit des Überwachungsmodus auszuwählen und den Benutzerbereich zur Zeit des Benutzermodus auszuwählen.

6. Cache-Speichervorrichtung nach Anspruch 5,
**dadurch gekennzeichnet,** daß die Cache-Rücksetzeinrichtung (800) selektiv nur Einträge innerhalb des Benutzerbereichs in dem Überwachungsmodus zurücksetzt.

## Revendications

1. Un dispositif de mémoire de cache réalisé dans un ordinateur afin de permettre un fonctionnement d'accès à haute vitesse à une mémoire principale de l'unité centrale de traitement, comprenant:
un moyen d'entré (600) d'un signal de mode indicatif du mode actuel parmi plusieurs modes de fonctionnement dudit ordinateur;
une unité de mémorisation (100) de cache pourvue de plusieurs entrées;
un moyen sélecteur (500) d'entrée pour choisir une entrée de l'unité (100) de mémoire de cache sur la base d'une première section d'une valeur d'adresse soumise à un accès et dudit signal de mode actuel;
un moyen de positionnement (700) de cache exerçant une fonction de mémorisation d'une donnée à partir d'une mémoire principale vers l'entrée choisie par ledit moyen sélecteur (500) d'entrée sur la base du fonctionnement d'accès de ladite unité centrale de traitement, afin de mémoriser une deuxième section d'une valeur d'adresse soumise à un accès vers ladite entrée choisie, et de positionnement, en outre, d'un drapeau valide disposé dans ladite entrée choisie;
un moyen de lecture (430) de cache pour comparer ladite deuxième section de ladite valeur d'entrée mémorisée dans ladite entrée choisie par ledit moyen sélecteur (500) d'entrée avec ladite deuxième section de ladite valeur d'adresse soumise à un accès sur la base du fonctionnement d'accès de ladite unité centrale de traitement, afin de lire ainsi une donnée mémorisée dans ladite entrée choisie, lorsque les deux sections ci-dessus coïncident l'une avec l'autre et qu'un drapeau valide est placé dans ladite entrée choisie; et
un moyen de restauration (800) de cache, exerçant une fonction de restauration collective de drapeaux valides, dans ladite unité de mémorisation (100) de cache, de toutes les entrées correspondant au mode choisi parmi ladite série de modes de fonctionnement et à aucun autre.

2. Un dispositif de mémoire de cache selon la revendication 1, dans lequel ladite premier section de ladite valeur d'adresse comprend des bits d'un ordre inférieur à ceux de ladite deuxième section.

3. Un dispositif de mémoire de cache selon la revendication 1, dans lequel ledit moyen sélecteur (500) d'entrée comprend un décodeur d'entrée (500), ledit signal de mode et ladite première section de ladite valeur d'adresse étant alloués à l'entrée dudit décodeur (500) d'adresse.

4. Un dispositif de mémoire de cache selon la revendication 1, dans lequel il est utilisé comme dit signal de mode, une valeur logique indicative d'un mode de supervision, correspondant à l'état où un logiciel de système d'exploitation est mis en oeuvre et un mode d'utilisateur correspondant à l'état où un logiciel d'application est utilisé par l'utilisateur est en cours d'exploitation.

5. Un dispositif de mémoire de cache selon la revendication 4, dans lequel ladite unité de mémoire (100) de cache est composée d'une zone de supervision et d'une zone d'utilisateur, ledit moyen sélecteur (500) d'entrée pouvant agir pour choisir des entrées dans ladite zone de supervision pendant que ledit mode de supervision est choisi, et pour choisir ladite zone d'utilisateur, pendant que ledit mode utilisateur est choisi.

6. Un dispositif de mémoire de cache selon la revendication 5, dans lequel ledit moyen de restauration (800) de cache ne restaure sélectivement, dans ledit mode de supervision, que des entrées situées à l'intérieur de ladite zone d'utilisateur.
